# EUROPÄISCHE PATENTSCHRIFT

(11) **EP 0 935 214 B1**
(45) Veröffentlichungstag und Bekanntmachung des Hinweises auf die Patenterteilung: **03.12.2008**
(21) Anmeldenummer: 99200263.4
(22) Anmeldetag: 29.01.1999
(51) Int. Cl.: G06K 19/073, G07F 7/10

(54) **Chipkarte mit integrierter Schaltung**
Smart card with integrated circuit
Carte à puce avec circuit intégré

(30) Priorität: 06.02.1998 DE 19804784
(43) Veröffentlichungstag der Anmeldung: 11.08.1999
(73) Patentinhaber: NXP B.V., 5656 AG Eindhoven (NL)
(72) Erfinder: Rabeler, Thorwald, 22335 Hamburg (DE)
(74) Vertreter: Röggla, Harald

(56) Entgegenhaltungen:
- EP-A- 0 512 542
- EP-A- 0 610 886
- US-A- 5 491 827

## Beschreibung

Die Erfindung betrifft eine Chipkarte mit einer integrierten Schaltung, die eine Steuereinheit in Form eines Mikroprozessors und Speicher enthält. Derartige Chipkarten sind allgemein bekannt und werden für verschiedene Zwecke verwendet. In häufigen Fällen werden solche Scheckkarten für Zwecke verwendet, in denen sich auf der Karte sicherheitsrelevante Informationen befinden. Dies ist beispielsweise der Fall bei Bankkarten, bei denen sich auf der Scheckkarte Guthaben oder Kreditlinien befinden sowie persönliche Geheimzahlen, oder bei Patientenkarten, auf denen sich vertrauliche Informationen über den Patienten befinden, die beispielsweise nur nach Eingabe einer persönlichen Geheimnummer auslesbar sein sollen. Ferner werden solche Karten als Zugangskontrolle für bestimmte Räume oder Gebäude verwendet. In allen Fällen soll verhindert werden, daß durch betrügerische Manipulationen geheime Daten aus der Karte ausgelesen werden können oder daß Daten auf der Karte in unerwünschter Weise verändert werden können.

EP-A-0 512 542 offenbart

, eine Chipkarte mit Mikroprozessor und Speicher, bei der ein unzulässiger, d.h. nicht gewünschter Zugriff auf Daten in der Karte zum Auslesen oder Verändern mit möglichst großer Sicherheit verhindert wird. Dabei ist eine von der eigentlichen Mikroprozessorschaltung entkoppelte Schutzschaltung vorgesehen, die jeweils angesprochenen Adressen überwacht.

Aufgabe der Erfindung ist es eine Chipkarte mit Mikroprozessor und Speicher anzugeben, bei der auf der additionellen Schutzschaltung verzichtet werden kann, aber trotzdem ein unzulässiger Zugriff auf Daten verhindert wird.

Diese Aufgabe wird erfindungsgemäß durch den kennzeichnenden Teil des Anspruchs 1 gelöst. Dadurch ist der Zugriff auf alle solchen Register und Speicher, in denen sich sicherheitsrelevante Informationen befinden, nur im System-Mode möglich. Der System-Mode arbeitet mit einem fest gespeicherten Programm, das selbstverständlich ebenfalls von außerhalb weder auslesbar noch veränderbar ist. Dieses Programm ist unabhängig von den jeweiligen Anwendungsfällen.

Dies hat den Vorteil, daß ein solches System-Programm nur einmal auf seine sicherheitsrelevanten Funktionen geprüft und freigegeben werden muß. Die Anwenderprogramme, die von den entsprechenden Institutionen wie Banken oder Krankenkassen erstellt und auf die Karte gebracht werden, brauchen dann nicht besonders geprüft zu werden. Jeder Zugriff auf geheime Daten im Rahmen eines Anwenderprogramms erfolgt ausschließlich über das System-Programm. Dies ist besonders wichtig auch für Chipkarten, die mehr als einer Anwendung dienen. Durch das System-Programm wird sichergestellt, daß alle verschiedenen Anwenderprogramme eindeutig und zuverlässig voneinander getrennt sind und nicht von einem Anwenderprogramm auf ein anderes bzw. auf darin verwendete Daten zugegriffen werden kann.

Zum Zugriff auf geheime Daten, die in einem Anwenderprogramm rechtmäßig verwendet werden sollen, wird stets ein bestimmter Sprung in das System-Programm ausgelöst, der das Mode-Bit umschaltet. Im System-Mode sind alle Register und alle Speicherplätze zugänglich. Andererseits kann im System-Mode aber genau geprüft werden, ob der gewünschte Zugriff tatsächlich zulässig ist. Diese Prüfung kann auch durch einen betrügerischen Benutzer nicht ausgeschaltet werden. Einen Zugriff auf geheime Daten ist auch jede Eingabe- und Ausgabeoperation von Daten gleichgestellt.

Die Sperrung von Speicherplätzen bzw. die Freigabe bestimmter Speicherplatzbereiche für jeweils ein Anwenderprogramm wird auf einfache Weise dadurch erreicht, daß der Speicher in bestimmte Bereiche unterteilt ist, die auch mit Segmenten oder Seiten bezeichnet werden, und unterschiedlichen Anwenderprogrammen sind dann zweckmäßig auch unterschiedliche Segmente zugeordnet. Die Segmente werden durch den Inhalt eines bzw. mehrerer entsprechende Register bestimmt, die nur im System-Mode veränderbar sind. Dadurch sind Speicherbereiche verschiedener Anwenderprogramme sicher gegeneinander abgegrenzt.

Zusätzlich kann innerhalb eines Segments der Zugriff auf nur einen Teil dieses Segments freigegeben werden, indem zusätzliche Register für eine Angabe einer Grenzadresse innerhalb eines Segments vorgesehen werden. Jede Adresse, d.h. die Bits geringerer Wertigkeit, werden automatisch mit dem Inhalt eines solchen Registers verglichen. Auch diese Register können nur im System-Mode gelesen und überschrieben werden.

Ferner ist, vorzugsweise im Segmentregister, eine Bitgruppe vorgesehen, deren Wert zusammen mit eingeschriebenen Daten in den Speicherplatz mit eingeschrieben wird. Beim Auslesen wird dann geprüft, ob der Inhalt des entsprechenden Bereichs der Speicherstelle mit dieser Bitgruppe übereinstimmt. Falls dies nicht der Fall ist, wird das Auslesen gesperrt.

Wenn von einem Benutzerprogramm im Benutzer-Mode auf ein Register oder einen Speicherplatz zugegriffen werden soll, der in diesem Benutzerprogramm nicht zulässig ist, kann anstelle einer besonderen Systemmeldung nur ein Wert ausgegeben werden, der einer leeren Speicherzelle entspricht, die also nach Herstellung der Karte nicht beschrieben worden ist. Auf diese Weise kann ein betrügerischer Benutzer nicht erkennen, ob er tatsächlich auf einen leeren Speicherplatz oder auf einen gesperrten Speicherplatz zugreifen wollte. Außerdem entspricht ein solcher Wert einem unbedingten Sprung in den System-Mode.

Die Sperrung aller nicht zugelassenen Speicherbereiche erfolgt also über Register, die nur im System-Mode veränderbar sind. Diese Register bilden wenigstens einen Teil der Register für spezielle Funktionen, der sogenanten SF-Register. Diese Register sind über einen registerinternen Bus miteinander verbunden. Außerdem hat dieser interne Registerbus eine Schnittstelle zum internen Datenbus, über die Daten vom Datenbus in die Register eingeschrieben oder aus den Registern zum Datenbus ausgelesen werden können. Zweckmäßig wird nun dieser Registerbus durch einen Schalter unterteilt, der nur im System-Mode geschlossen ist. Dies ist eine sehr einfache Möglichkeit, die entsprechenden Register und indirekt damit auch alle nicht zugänglichen Speicherplätze zu sperren.

Ausführungsbeispiele der Erfindung werden nachfolgend anhand der Zeichnung erläutert. Es zeigen:
Fig. 1 ein Blockschaltbild der wichtigsten Teile eines Mikroprozessors für eine Chipkarte,
Fig. 2 den genaueren Aufbau eines Details daraus,
Fig. 3 ein Blockschaltbild für die Überprüfung von Adreßgrenzen,
Fig. 4 ein Blockschaltbild für die Prüfung des Inhalts von Speicherplätzen,
Fig. 5 eine symbolische Darstellung der Unterteilung zwischen geschütztem SystemBereich und ungeschütztem Benutzer-Bereich,
Fig. 6 ein Beispiel für den Aufbau eines Programmstatusworts in zwei getrennten Registern.

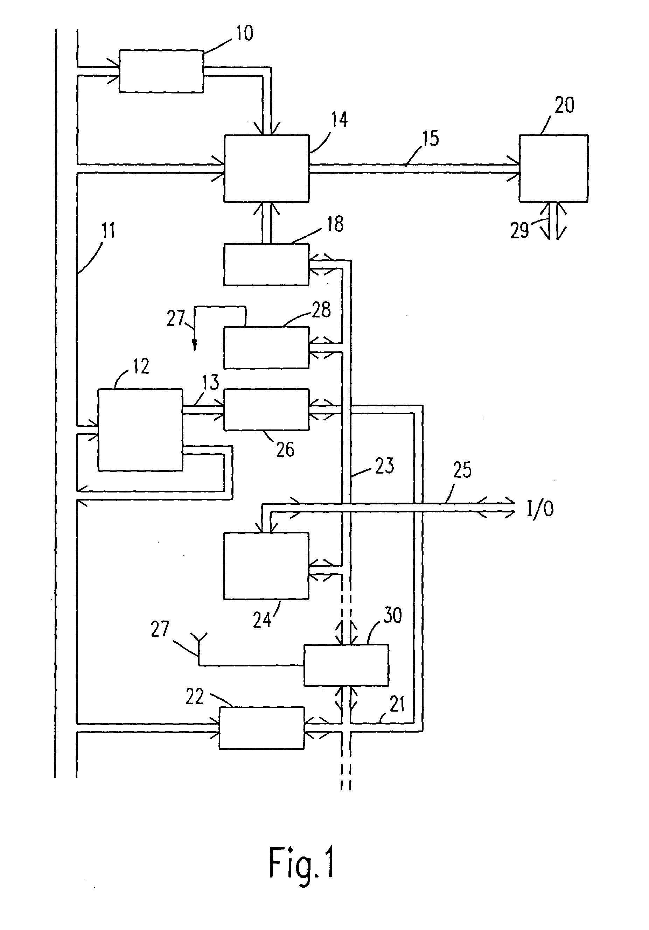

Die Fig. 1 zeigt schematisch die für die Erfindung wesentlichen Teile eines Mikroprozessors. An einen internen Bus 11, der eine Anzahl Daten- und Steuerleitungen umfaßt, ist ein Programmzähler 10 angeschlossen, der über den Datenbus auf eine bestimmte Adresse gesetzt werden kann und im übrigen autonom weiterzählt. Die dafür notwendigen Steuersignale sind beim Programmzähler sowie bei den übrigen Elementen in dieser Figur sowie in den anderen Figuren der Übersichtlichkeit halber nicht einzeln dargestellt.

Der Programmzähler 10 liefert seinen Inhalt an eine Speicherverwaltungseinheit MMU 14, die über eine Verbindung 15 einen Speicher 20 mit Adressen- und Steuersignalen versorgt. Dieser Speicher 20 besteht zweckmäßig aus mehreren Speichereinheiten, nämlich insbesondere einem ROM für das Systemprogramm bzw. wesentliche Teile davon, einem beschreibbaren EEPROM für Anwenderprogramme und bestimmte feste Daten wie Geheimnummern sowie aus einem flüchtigen RAM insbesondere zur Speicherung von Zwischenergebnissen bei einzelnen Verarbeitungsschritten. Die Auswahl der einzelnen Speicher geschieht durch Steuersignale über die Verbindung 15. Über eine Verbindung 29 werden aus adressierten Speicherplätzen ausgelesene Daten abgegeben bzw. in beschreibbare Speicherplätze einzuschreibende Daten zugeführt.

Die MMU14 ist ferner direkt mit dem Bus 11 verbunden, um Daten vom Bus 11 als Adressen dem Speicher 20 zuzuführen. Außerdem ist die MMU14 mit Registern 18 verbunden, die hier vereinfacht als ein Block dargestellt sind und die Angaben enthalten, welche Speichereinheit im Speicher 20 auszuwählen ist und zusätzlich, welcher Speicherbereich bzw. Adreßbereich in der ausgewählten Speichereinheit angesprochen wird. Dazu ist insbesondere die EEPROM-Speichereinheit in Bereiche unterteilt, die allgemein als Segmente oder Seiten bezeichnet werden. Jedem Anwenderprogramm werden ein oder mehrere bestimmte Segmente für Programminformationen und Daten zugeordnet, die beim Einschreiben des betreffenden Anwenderprogramms festgelegt werden. Diese Zuordnungen können lediglich durch das Systemprogramm verändert werden, wie spätert erläutert wird.

Eine arithmetisch-logische Einheit ALU12 ist mit einem Eingang mit dem Bus 11 verbunden. Der interne Aufbau dieser Einheit, der insbesondere eine Recheneinheit und einen Akkumulator sowie weitere Register umfaßt, ist an sich bekannt und daher hier nicht weiter dargestellt. Die Rechenergebnisse dieser Einheit 12 werden wieder auf den Bus 11 zurückgeführt. Außerdem werden einige Signale, die bei der Durchführung von Berechnungen auftreten, wie Übertragssignale, Überlaufmeldungen oder Null-Werte, über eine Verbindung 13 einem Register 26 zugeführt, das einen Teil des sogenannten Programmstatusworts enthält. Der zweite Teil des Programmstatusworts ist in einem Register 28 enthalten.

Für die Eingabe oder Ausgabe von Daten, beispielsweise von außerhalb der Chipkarte oder von einem Koprozessor in der Chipkarte bzw. auf demselben Chip wie der Mikroprozessor, sind Register 24 vorgesehen, die über eine Verbindung 25 von außerhalb des Mikroprozessors geladen werden können oder nach außerhalb Daten abgeben können.

Die Register 18, 28 und 24 sind über einen speziellen Bus 23 miteinander verbunden, der auf eine Verbindungseinheit 30 führt. An diesen Bus 23 können noch weitere Register angeschlossen sein, wie durch die gestrichelte Linie zur Verbindungseinheit 30 angedeutet ist. Die Verbindungseinheit 30 ist ferner mit einem internen Bus 21 verbunden, der auf das Register 26 für den einen Teil des Programmstatusworts sowie auf eine Koppeleinheit 22 führt, die diesen Bus 21 mit dem Bus 11 bei entsprechender Ansteuerung über nicht gesondert dargestellte Steuerleitungen verbindet. Die Busse 21 und 23 stellen den in Mikroprozessoren üblichen internen Bus für die Register für spezielle Funktionen dar. Diese beiden Teile bilden einen einheitlichen Bus, wenn die Verbindungseinheit 30 durch Ansteuerung über die Leitung 27 die beiden Busteile verbindet.

Die Steuerleitung 27 ist mit einem bestimmten Teil des Registers 28 verbunden, der ein Mode-Bit enthält. Der Wert dieses Bits bestimmt, ob der Mikroprozessor im System-Mode oder im Benutzer-Mode arbeitet. Wenn der Wert dieses Bits den System-Mode angibt, wird die Verbindungseinheit 30 angesteuert, um beide Busteile 21 und 23 miteinander zu verbinden, so daß dann ein einheitlicher Bus hergestellt wird, über den alle Register für spezielle Funktionen, wie die dargestellten Register 18, 24, 26 und 28 sowie gegebenenfalls weitere, nicht dargestellte Register miteinander verbunden sind. Im System-Mode kann also auf alle Register zugegriffen werden. Im Benutzer-Mode wird durch den entsprechenden anderen Wert des Mode-Bits über die Steuerleitung 27 die Verbindungseinheit 30 angesteuert, um die beiden Busteile 21 und 23 zu trennen. Nun kann nicht mehr auf die Register 18, 28 und 24 sowie weitere am Bus 23 angeschlossene Register zugegriffen werden, und zwar weder zum Schreiben noch auch nur zum Lesen.

Der Übergang vom Benutzer-Mode in den System-Mode geschieht durch einen besonderen Sprungbefehl, durch den das Mode-Bit im Register 28 auf den System-Mode umgeschaltet wird. Gleichzeitig wird der Anfang des System-Programms aufgerufen, dessen wesentlicher Inhalt unveränderlich festgelegt ist. Im System-Programm kann beispielsweise das Register 18 verändert werden, um andere Speichereinheiten oder andere Segmente in einer Speichereinheit im nachfolgenden Anwenderprogramm adressieren zu können. Am Schluß des System-Programms wird im Register 28 das Mode-Bit wieder zurückgeschaltet, und damit wird über die Steuerleitung 27 in der Verbindungseinheit 30 wieder die Verbindung zum Bus 23 unterbrochen, so daß dann kein Zugriff auf die daran angeschlossenen Register möglich ist.

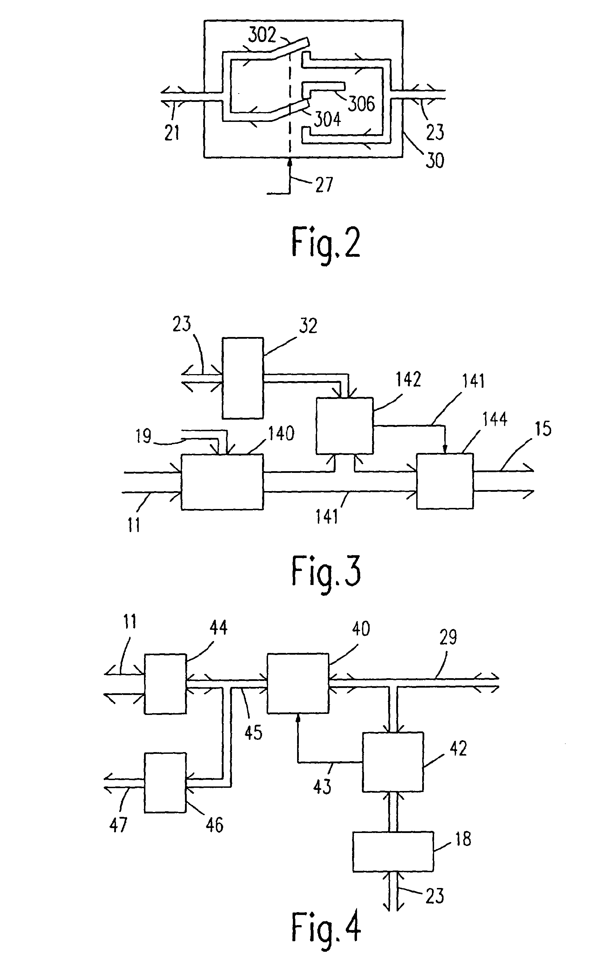

In Fig. 2 ist der Aufbau der Verbindungseinheit 30 etwas detaillierter dargestellt. Die Übertragung von Daten vom Bus 21 zum Bus 23 erfolgt über einen Schalter 302, während die vom Bus 23 zum Bus 21 zu übertragenden Daten über einen Schalter 304 führen. Die Schalter 302 und 304 werden gemeinsam über die Steuerleitung 27 angesteuert. In der in Fig. 2 dargestellten Stellung der Schalter 302 und 304 ist die Verbindung unterbrochen, und zum Bus 21 werden Daten übertragen, die von einer Leitung 306 mit festem Datenwert kommen. Dieser Datenwert entspricht beispielsweise dem Wert des Sprungbefehls, mit dem in den System-Mode gesprungen wird. Wenn also in einem Benutzerprogramm verbotener Weise auf ein nicht zugelassenes Register zugegriffen werden soll, wird also ein Wert entsprechend dem Sprungbefehl ausgelesen. Wenn dieser Wert als Befehl interpretiert werden soll, erfolgt bei einem solchen verbotenen Zugriff also immer ein Sprung in den System-Mode, in dem nur festgelegte, von einem Benutzer nicht veränderbare Befehlsfolgen ablaufen.

In Fig 3 sind einige Teile der MMU14 näher dargestellt. Die Verbindung zum Bus 11 führt auf einen Adreßrechner 140, wo die Daten vom Bus 11 als Adresse mit einem über die Verbindung 19 vom Register 18 in Fig. 1 kommenden Adreßteil höherer Wertigkeit verknüpft und über die Verbindung 141 ausgegeben werden. Die Verbindung 141 führt auf eine Blockiereinheit 144 und einen Vergleicher 142. Ein zweiter Eingang des Vergleichers 142 ist mit dem Ausgang eines Registers 32 verbunden, das ebenfalls als Register für spezielle Funktionen mit dem Bus 23 verbunden ist, der nur im System-Mode zugänglich ist und in diesem System-Mode mit einem Wert für eine Adreß-Grenze geladen werden kann. Diese Adreß-Grenze wird mit vorzugsweise Teilen der Adresse auf der Verbindung 141 verglichen, und wenn die Adresse innerhalb der vorgegebenen Grenze liegt, wird vom Vergleicher 142 über die Leitung 141 die Blockiereinheit 144 freigegeben und die Adresse über die Verbindung 15 dem Speicher 20 in Fig. 1 zugeführt. Auf diese Weise kann im Benutzer-Mode der Zugriff auf einen Teil eines dem betreffenden Benutzerprogramm zugeordneten Segments gesperrt werden.

Eine weitere Sicherung gegen Zugriff auf nicht erlaubte Daten ist in Fig. 4 schematisch dargestellt. Wenn aus dem Speicher 20 in Fig. 1 der Inhalt eines Speicherplatzes ausgelesen und die entsprechenden Daten über die Verbindung 29 abgegeben werden, werden diese einem Vergleicher 42 und einer weiteren Blockiereinheit 40 zugeführt. Der Vergleicher 42 erhält an einem weiteren Eingang Daten aus dem Register 18, das über den Bus 23 geladen wurde. Der Vergleicher 42 prüft bestimmte Teile des Datenworts auf der Verbindung 29 auf Gleichheit mit den vom Register 18 zugeführten Daten. Nur bei Gleichheit wird über die Leitung 43 die Blockiereinheit 40 freigegeben und die Daten auf der Verbindung 45 abgegeben. Diese Daten werden abhängig von entsprechenden Steuersignalen auf nicht gesondert dargestellten Steuerleitungen in ein Datenregister 44 eingeschrieben, das diese Daten dem Bus 11 zuführt, oder in Befehlsregister 46, das diese Daten als Befehl einem nicht dargestellten Befehlsdekoder zuführt.

Wenn vom Bus 11 über das Datenregister 44 Daten in den Speicher 20 in Fig. 1 eingeschrieben werden sollen, gehen diese ebenfalls über die Blockiereinheit 40 und werden dort um Daten entsprechend dem Inhalt des Registers 18 ergänzt und über die Verbindung 29 in den Speicher 20 eingeschrieben. Dadurch wird beim Auslesen dieser Daten in dem zugehörigen Benutzerprogramm die erforderliche Gleichheit mit dem Inhalt des Registers 18 festgestellt. In einem anderen Benutzerprogramm, in dem diese Prüfdaten einen anderen Wert haben, kann also nicht auf Daten eines fremden Benutzerprogramms zugegriffen werden.

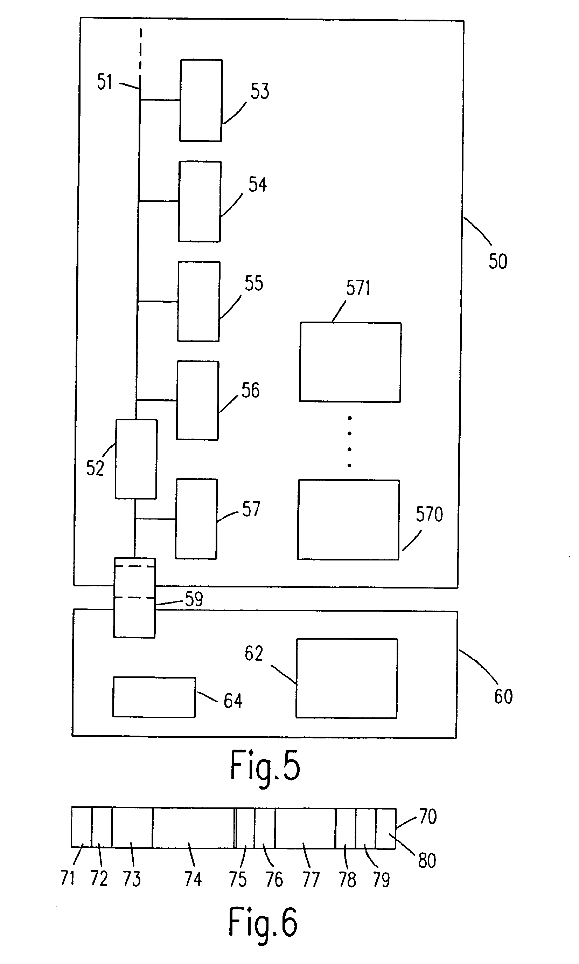

In Fig. 5 ist symbolisch die Aufteilung in einen geschützten Systemteil 50 und einen ungeschützten Benutzerteil 60 dargestellt. Im Benutzerteil 60 ist der Zugriff auf einen Stapelspeicher 62 und den Programmzähler 64 freigegeben. Außerdem steht diesem Benutzerteil eine Hälfte des Registers 59 für das Programmstatuswort zur Verfügung. Der andere Teil dieses Registers 59 steht nur dem Systemteil 50 zur Verfügung. Darin kann über Register 57 auf System-Stapelspeicher 570, 571 zugegriffen werden, außerdem über eine Schnittstelle 52 auf den Bus für die Register für spezielle Funktionen, wie ein Register 56 für die Steuerung der Schreibfreigabe in Speicher und das Register 55 für überhaupt den Zugriff auf Speicher sowie das Register 54 für Eingabe/Ausgabe-Operationen und ein Register 53 für einen Koprozessor, der vorzugsweise auf demselben Chip angeordnet ist. Es können noch weitere derartige, nicht dargestellte Register vorhanden sein.

Der Systembereich 50 mit den Zugriffsmöglichkeiten auf die darin angedeuteten Einheiten ist nur möglich, wenn das Mode-Bit gesetzt ist. Im Benutzer-Bereich ist der Zugriff auf die darin dargestellten Einheiten 62 und 64 möglich, jedoch nicht auf die im Systembereich 50 dargestellten Einheiten.

In Fig. 6 ist ein Beispiel für den Aufbau eines Programmstatusworts 70 dargestellt. Der Abschnitt 71 enthält das Mode-Bit. Im Abschnitt 72 befindet sich ein Bit, mit dessen Hilfe der Programmablauf überprüft werden kann, was insbesondere bei der Erstellung von Programmen wichtig ist. Der Inhalt des Abschnitts 73 dient der Registerauswahl. Mit dem Inhalt des Abschnitts 74 werden Unterbrechungsanforderungen maskiert. Diese Abschnitte gehören zu derjenigen Hälfte des Programmstatusworts, das nur im System-Mode veränderbar ist.

Der Teil nach dem Doppelstrich ist auch im Benutzer-Mode lesbar und veränderbar und enthält zwei Abschnitte 75 und 76, in denen Übertragssignale gespeichert werden, die in der ALU12 in Fig. 1 entstehen. Der Abschnitt 77 kann weitgehend frei vom Benutzerprogramm definiert werden. Im Abschnitt 78 wird die Meldung gespeichert, daß in der ALU12 in Fig. 1 ein Überlauf aufgetreten ist. Der Abschnitt 79 gibt an, daß in der ALU12 ein negatives Ergebnis aufgetreten ist, und der Abschnitt 80 gibt an, daß der Wert Null bei der Berechnung entstanden ist. Da dies nur Signale der ALU12 in Fig. 1 sind, muß der Zugriff auf diese Bereiche auch im Benutzer-Mode möglich sein.

## Patentansprüche

1. Chipkarte mit einer integrierten Schaltung, die eine Steuereinheit in Form eines Mikroprozessors und wenigstens einen Speicher mit einer Vielzahl über Adressen zugreifbarer Speicherplätze enthält, **dadurch gekennzeichnet, dass** der Mikroprozessor mehrere Register umfaßt, von denen mindestens ein PSW-Register ein Programmstatuswort enthält, in dem der Wert wenigstens eines vorgegebenen Mode-Bits einen Benutzer-Mode oder einen System-Mode bestimmt, wobei der Zugriff auf wenigstens Teile des PSW-Registers sowie auf alle solchen Register und auf Speichersegmente, die nur im System-Mode verwendet werden, bei einem den Benutzer-Mode angebenden Mode-Bit gesperrt ist.

2. Chipkarte nach Anspruch 1, wobei das PSW-Register aus wenigstens einem ersten und einem zweiten Teilregister besteht und das erste Teilregister das Mode-Bit sowie eine Information zur Auswahl eines von mehreren Register-Blöcken enthält und nur im System-Mode lesbar und veränderbar ist.

3. Chipkarte nach Anspruch 1 oder 2, wobei jede im Benutzer-Mode auftretende Unterbrechungsanforderung einen Sprung in den System-Mode auslöst, der das Mode-Bit umschaltet, und alle Register, die für Eingabe/Ausgabe-Operationen und für die Steuerung von mit dem Mikroprozessor gekoppelten Steuerschaltungen dienen, nur im System-Mode verwendet werden.

4. Chipkarte nach einem der vorhergehenden Ansprüche, wobei wenigstens eines der Register ein erstes Segment-Adressen-Register ist, das die Adresse eines Speichersegments enthält, in dem Daten für das momentan ausgeführte Programm enthalten sind, und wenigstens ein weiteres Register ein zweites Segment-Adressen-Register ist, das die Adresse eines vorzugsweise anderen Speichersegments enthält, und im Benutzer-Mode eine Veränderung des ersten und des zweiten Segment-Adressen-Registers gesperrt ist.

5. Chipkarte nach einem der vorhergehenden Ansprüche, wobei weitere Register Adreß-Register sind, die je eine Adresse innerhalb eines vom Segmentadressen-Register angegebenen Speicherbereichs angeben, wobei jedem Adreß-Register ein Hilfs-Adreßregister zugeordnet ist, das nur im System-Mode veränderbar ist und wenigstens die höchstwertigen Bits der Adresse sowie eine Prüfinformation enthält, und wobei ein Vergleicher vorgesehen ist, der die Prüfinformation des Hilfs-Adreßregisters mit aus vorgegebenen Bitstellen des adressierten Speicherplatzes ausgelesenen Informationen vergleicht und im Benutzer-Mode nur bei Übereinstimmung der Prüfinformation mit der ausgelesenen Information die Weiterleitung der aus dem adressierten Speicherplatz ausgelesenen Information oder eine Veränderung der Information des adressierten Speicherplatzes freigibt.

6. Chipkarte nach einem der vorhergehenden Ansprüche, wobei von einem im Benutzer-Mode adressierten Register, das nur im System-Mode verwendet wird, nur ein vorgegebenes Bitmuster, vorzugsweise das Bitmuster eines nach der Herstellung der integrierten Schaltung nicht veränderten Speicherplatzes, weitergeleitet wird.

7. Chipkarte nach einem der vorhergehenden Ansprüche, wobei die Register über einen Bus mit der übrigen Schaltung des Mikroprozessors derart verbunden sind, daß die nur im System-Mode verwendeten Register am vom Mikroprozessor abgewandten Ende des Busses angeordnet sind, und in dem Bus vor diesem Register ein nur vom Mode-Bit gesteuertes Sperrgatter angeordnet ist.

## Claims

1. A chip card with an integrated circuit provided with a control unit in the form of a microprocessor and at least one memory with a plurality of memory locations that can be accessed via addresses, **characterized in that** the microprocessor includes a plurality of registers of which at least a PSW register contains a program status word in which the value of at least one predetermined mode bit determines a user mode or a system mode, the access to at least parts of the PSW register as well as to all registers and memory segments that are used only in the system mode being inhibited when the mode bit indicates the user mode.

2. A chip card as claimed in claim 1, in which the PSW register comprises at least a first sub-register and a second sub-register and the first sub-register contains the mode bit as well as information for the selection of one from a plurality of register blocks and can be read and modified only in the system mode.

3. A chip card as claimed in claim 1 or 2, in which each interrupt request occurring in the user mode triggers a jump to the system mode which switches over the mode bit, and all registers which serve for input/output operations and for the control of control circuits coupled to the microprocessor are used only in the system mode.

4. A chip card as claimed in any one of the preceding claims, in which at least one of the registers is a first segment address register which contains the address of a memory segment containing data for the current program that is being executed, and at least a further register is a second segment address register which contains the address of a preferably other memory segment and a modification of the first and the second segment address register is inhibited in the user mode.

5. A chip card as claimed in any one of the preceding claims, in which further registers are address registers of which each one indicates a respective address within a memory zone indicated by the segment address register, each address register having assigned to it an associated auxiliary address register which can be modified only in the system mode and contains at least the most significant bits of the address as well as test information and there being provided a comparator which compares the test information of the auxiliary address register with information read from predetermined bit locations of the addressed memory location and, in the user mode, enables the further transport of the information read from the addressed memory location, or a modification of the information of the addressed memory location, only in the case of correspondence between the test information and the information read out.

6. A chip card as claimed in any one of the preceding claims, in which from a register which is addressed in the user mode and is used only in the system mode only a predetermined bit pattern, preferably being the bit pattern of a memory location that has not been modified after the manufacture of the integrated circuit is transported.

7. A chip card as claimed in any one of the preceding claims, in which the registers are connected, over a bus, to the remainder of the circuit of the microprocessor in such a manner that the registers which are used only in the system mode are arranged at the end of the bus that is remote from the microprocessor and an inhibit gate which is controlled only by the mode bit is inserted in the bus and precedes said register.

## Revendications

1. Carte à puce avec un circuit intégré, qui contient une unité de commande sous forme d'un microprocesseur et au moins une mémoire avec une pluralité d'emplacements mémoires accessibles par le biais d'adresses, **caractérisé en ce que** le microprocesseur comporte plusieurs registres, dont au moins un registre PSW contient un mot d'état de programme dans lequel la valeur d'au moins un bit de mode prédéfini désigne un mode utilisateur ou un mode système, l'accès à au moins des parties du registre PSW ainsi qu'à tous les registres de ce genre et à des segments de mémoire, qui sont employés uniquement dans le mode système, étant bloqué lorsqu'un bit de mode indique le mode utilisateur.

2. Carte à puce selon la revendication 1, sachant que le registre PSW se compose au moins d'un premier et d'un deuxième registre partiel, et que le premier registre partiel contient le bit de mode ainsi qu'une information pour sélectionner un bloc de registre parmi plusieurs blocs de registre, et il peut être lu et modifié uniquement dans le mode système.

3. Carte à puce selon la revendication 1 ou 2, sachant que chaque demande d'interruption survenant au cours du mode utilisateur déclenche un saut dans le mode système qui commute le bit de mode, et tous les registres, qui servent à des opérations d'entrée-sortie et à la commande de circuits de commande couplés au microprocesseur, sont employés uniquement dans le mode système.

4. Carte à puce selon l'une quelconque des revendications précédentes, sachant qu'au moins un des registres est un premier registre d'adresses de segment qui contient l'adresse d'un segment de mémoire dans lequel sont contenues des données pour le programme exécuté momentanément, et qu'au moins un autre registre est un deuxième registre d'adresses de segment qui contient l'adresse de préférence d'un autre segment de mémoire, et une modification des premier et deuxième registres d'adresses de segment est bloquée dans le mode utilisateur.

5. Carte à puce selon l'une quelconque des revendications précédentes, sachant que d'autres registres sont des registres d'adresses qui indiquent chacun une adresse à l'intérieur d'une zone de mémoire indiquée par le registre d'adresses de segment, chaque registre d'adresses étant affecté à un registre d'adresse d'aide qui peut être modifié uniquement dans le mode système et contient au moins les bits les plus significatifs de l'adresse ainsi qu'une information de vérification, et sachant qu'il est prévu un comparateur qui compare l'information de vérification du registre d'adresse d'aide à des informations lues à des positions de bit prédéfinies de l'emplacement mémoire adressé et qui, dans le mode utilisateur uniquement en cas de concordance de l'information de vérification avec l'information lue, libère le transfert de l'information lue dans l'emplacement mémoire adressé ou une modification de l'information de l'emplacement mémoire adressé.

6. Carte à puce selon l'une quelconque des revendications précédentes, sachant qu'uniquement une combinaison de bits prédéfinie, de préférence la combinaison de bits d'un emplacement mémoire non modifié après la fabrication du circuit intégré, est transférée par un registre, adressé dans le mode utilisateur, qui est employé uniquement dans le mode système.

7. Carte à puce selon l'une quelconque des revendications précédentes, sachant que les registres sont reliés par un bus au reste des circuits du microprocesseur de manière telle que les registres employés uniquement dans le mode système soient disposés à l'extrémité du bus opposée au microprocesseur et qu'une porte de blocage commandée uniquement par le bit de mode soit disposée sur le bus devant ce registre.
